# EUROPEAN PATENT SPECIFICATION

(11) **EP 0 352 865 B1**
(45) Date of publication and mention of the grant of the patent: **28.12.1994**
(21) Application number: 89201969.6
(22) Date of filing: 25.07.1989
(51) Int. Cl.: A01C 5/06, A01B 45/00, A01B 49/06, A01C 7/20, A01C 23/02

(54) **Device for cutting grooves in the ground**
Vorrichtung zum Schneiden von Rillen in den Boden
Appareil pour ouvrir des sillons dans le sol

(30) Priority: 27.07.1988 NL 8801889; 18.04.1989 NL 8900965
(43) Date of publication of application: 31.01.1990
(73) Proprietor: Veenhuis Machines B.V., NL-8102 HE Raalte (NL)
(72) Inventor: Smit, Berend Jan, NL-7475 AK Markelo (NL)
(74) Representative: Louet Feisser, Arnold

(56) References cited:
- DE-A- 3 117 536
- DE-A- 3 607 267
- FR-A- 2 201 613
- FR-A- 2 385 313

## Description

The invention relates to a device for cutting grooves in the ground, designed to be fitted behind a traction vehicle in conjunction with a device for placing a product in the ground, and comprising a frame and a number of cutting arms which are disposed next to each other on the frame at right angles to the direction of travel and movable essentially in the vertical direction, and each of which at the rear end, viewed in the direction of travel, bears a cutter with a cutter blade for cutting a groove in the ground.

Such a device, see DE-A-3607267, is known in practice and is used, for example, in conjunction with a seed-drill when new grass is to be sowed in existing grassland by depositing grass-seed in grooves which are cut in the existing turf sod. In the known device the cutter arms are leaf springs which near their front end, viewed in the direction of travel, are fixed on a bar carried by the frame and disposed at right angles to the direction of travel. The bar is rotatable about its longitudinal axis, and the position of the bar can be adjusted in direction of rotation. This makes it possible to move the leaf spring up and down and to adjust the force with which the leaf springs press the cutters into the ground.

This known device has, however, a number of disadvantages. The leaf springs are very slack in the vertical direction and can be twisted relatively easily about their longitudinal axis. This means that it is not ensured that the cutters will cut straight through the ground, which is necessary for obtaining a flawless groove.

Problems occur particularly when the traction vehicle with the seed-drill coupled to it goes through a bend during sowing, with lateral forces thus being exerted on the cutter arms. Moreover, when the device is not in operation and the cutter arms are taken into a position clear of the ground, the cutter arms swing freely up and down, which is a disadvantage in particular when travelling over uneven ground.

The leaf springs are also relatively wide, with the result that the cutters move very far apart, which means that optimum distribution of the seed cannot be achieved. The width of the leaf springs also means that when there are certain uneven patches in the ground, such as molehills or stones, the leaf springs slide over these uneven patches and the cutters are raised and temporarily come to rest free of the ground.

The object of the present invention is to eliminate these disadvantages and produce a device of the above-mentioned type which is considerably more stable than the known device and permits optimum distribution of the seed over the ground.

This object is achieved by a device of the above-mentioned type which is characterized by the features of the characterising portion of claim 1.

In the device according to the invention the cutter arms, which are rigid per se, can move only in the vertical direction and are subjected to little or no twisting. This achieves a very stable design of the cutter arms, through which flawless grooves can be cut in the ground.

It is expedient for each cutter arm to be rigidly connected at its pivot point to a second arm which is movable in the same vertical plane as the cutter arm, and which together with the cutter arm forms a lever pivoting about the hinge pin, and the spring for pressing the rear of the cutter arm downwards acts on the free end part of the second arm, the spring thereby pressing this end in the direction of a stop which is adjustable relative to the frame. The cutter arm can be moved up and down by means of the adjustable stop. When the cutter arms have been lowered and are in the working position, in which the free end parts of the second arms are lying free of the adjustable stops, the cutter arms are pressed by the springs onto the ground.

When the device is out of operation and the cutter arms have been raised by means of the adjustable stops, the second arms are pressed by the springs against the adjustable stops, so that the cutter arms cannot swing freely up and down.

In a practical embodiment the free end part of each second arm is provided with at least one throughgoing hole extending in the direction of movement, and through which a pin fixed in the stop projects, while the pin bears a spring stop at its free end and a compression spring is disposed round the pin between the spring stop and the free end part of the second arm. This structure is compact and also makes it possible to vary the spring tension of the spring by varying the distance between the spring stop and the adjustable stop.

The adjustable stop is preferably a bar which runs in the transverse direction and is designed as a common stop for all second arms, and which is adjustable relative to the frame by means of one or more screwed spindles. In this design all cutter arms can be moved up and down simultaneously, and the force with which the cutter arms are pressed onto the ground can be set simultaneously for all arms.

The invention also relates to a combination of the device according to the invention and a device for placing a product in the ground.

The invention will now be explained in greater detail with reference to the description of a preferred embodiment of the device according to the invention shown in the drawing, in which:
- Fig. 1 is a side view of the device according to the invention, fastened to the rear of a tractor, and combined with a seed-drill;
- Fig. 2 shows the device according to the invention in side view and on a slightly enlarged scale;
- Fig. 3 is a front view of the device according to the invention, viewed in the direction of the arrow III in Fig. 2; and
- Fig. 4 is a view in perspective of a number of cutter arms fixed on the hinge pin.
- Fig. 5 is a side view of the device according to the invention fastened to the rear of a slurry tanker, and combined with a device for injecting slurry into the ground.

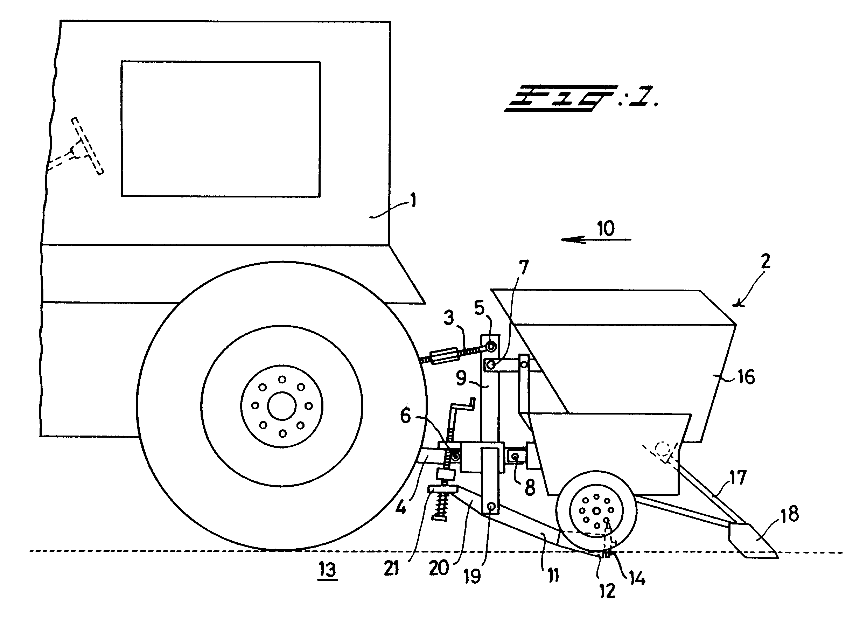

Fig. 1 shows the device according to the invention for cutting grooves in the ground disposed between a tractor 1 and an ordinary seed-drill 2. The device is fastened at one side to the three-point suspension 3, 4 of the tractor by means of fastening points 5, 6, and at the other side the seed-drill is fastened to the device by means of the fastening points 7, 8 with which the seed-drill is normally fastened to the three-point suspension of the tractor.

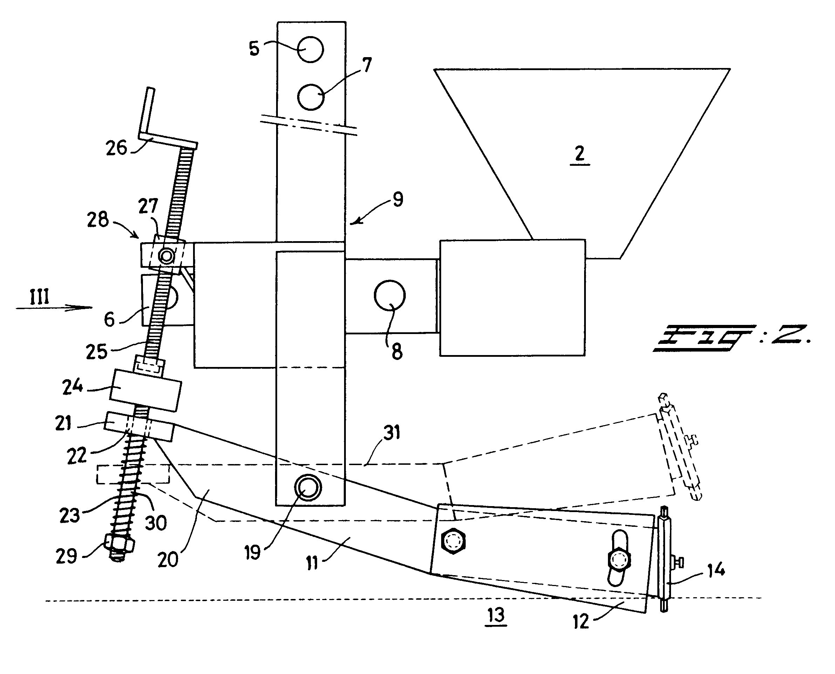

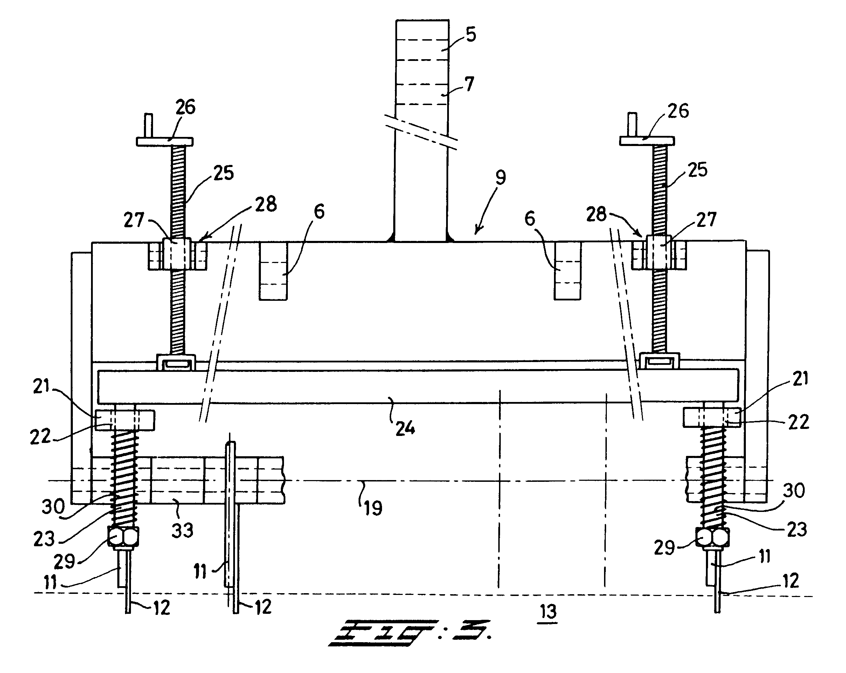

As also shown in Figs. 2 and 3, the device according to the invention comprises a frame 9, on which the fastening points 5, 6 and 7, 8 to the tractor 1 and the seed-drill 2 are disposed. However, the device has a number of cutter arms 11 which are disposed next to each other on the frame 9 at right angles to the direction of travel (indicated by the arrow 10 in Fig. 1). Each cutter arm has near its rear end, viewed in the direction of travel, a cutter 12 with which a groove can be cut in the ground 13. Provision is also made at the end of each cutter arm for a so-called groove widener 14, which widens the groove cut by the cutter 12. Seed is placed by the seed-drill 2 in the groove widened by the cutter 12 and the groove widener 14. This seed is placed in the groove from the seed hopper 16 through a tube 17 and a so-called coulter 18.

Seed-drills of this type are generally known and per se do not constitute part of the present invention.

The cutter arms 11 are made rigid and hingedly mounted next to each other in vertical planes on a common hinge pin 19 carried by the frame 9. The hinge pin is at right angles to the direction of travel 10. Each cutter arm 11 is rigidly connected at its pivot point 19 to a second arm 20 which is movable in the same vertical plane as the cutter arm 11. The cutter arm 11 and the second arm 20 together form a lever which can be pivoted about the hinge pin 19.

The width of the cutter arms 11 is relatively small compared with their height. This means that the position of the cutters 12 is hardly affected at all by unevennesses in the ground, such as molehills. The cutter arms 11 as it were cut through these unevennesses and remain more or less at the same level in the process.

The free end part 21 of each second arm is provided with a throughgoing hole 22 extending in the direction of movement thereof, and through which a screw-threaded pin 23 extends. All pins 23 are fixed on a common stop in the form of a bar 24 running in the transverse direction. The position of the bar 24 is adjustable relative to the frame 9 by means of two screwed spindles 25 which can be operated manually by means of a cranked handle 26. The nuts 27 mating with the screwed spindles 25 are hingedly connected at 28 to the frame 9. Each pin 23 is provided at its free end with a spring stop in the form of a nut 29. A compression spring 30 is disposed round the pin 23 and between the spring stop 29 and the free end part 21 of the second arm 20. This compression spring 30 has the tendency to press the second arm 20 belonging to it upwards and thereby the cutter 12 carried by the cutter arm 11 downwards into the ground 13. As can be seen in the drawing, the free end part 21 of each second arm 20 is resiliently supported at the bottom side by the compression spring 30, and the movement of each arm 20 at the top side is limited by the stop bar 24.

Since the pins 23 are fixed in the stop bar 24, when the cutter arms 11 are in the working position and the free end parts 21 are lying clear of the stop bar 24, the pressure of the springs 23, and thus the force with which the cutters 12 are pressed into the ground, can be adjusted by moving the stop bar 24 up and down. When the bar 24 is moved upwards by means of the screwed spindles 25, the spring stops 29 will also be moved up and at the same position of the frame 9 relative to the ground 13 the springs 23 will be compressed further, thereby increasing the clamping force thereof. The stop bar 24 also serves to raise the cutter arms 11 fully when the device is out of operation. This is carried out by moving the bar 24 downwards by means of the screwed spindles 25 until the levers formed by the cutter arms 11 and the second arms 20 are approximately in the position indicated by the dotted line 31.

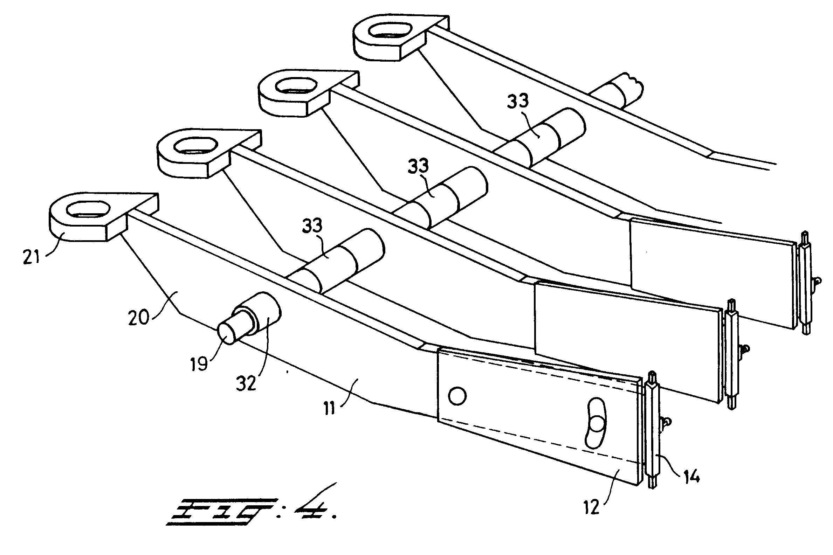

Fig. 4 shows schematically a number of levers formed by a cutter arm 11 and a second arm 20 mounted on the hinge pin 19. The levers are mounted on the hinge pin 19 by means of, for example, bearing bushes 32. Spacers 33 are disposed between the levers. The distance between the levers on the hinge pin 19 can be varied and adjusted to the desired sowing width by varying the length of the spacers 33. Through the specific design of the levers mounted on the hinge pin 19, the minimum distance between the cutters 12 can be approximately 4 cm, which is smaller than is possible in the known device, in which the cutters are mounted on leaf springs. The minimum distance between the cutters is about 8.5 cm in the known device.

In order to permit adjustment of the distance between the cutters 12, the end part 21 of each second arm 20 can be provided with several adjacent holes 22, so that the pin 23 can project through the most suitable hole.

The frame can also be fitted with a container in which weights can be placed in order to increase the overall weight of the device. This can be necessary if the ground is hard and great force is needed to make the cutters cut through the ground.

Through the design of the device according to the invention the cutter arms with the cutters mounted thereon are very stable, and flawless grooves can be cut in the ground, even when a bend is being negotiated. The cutter arms 11 can be raised easily by means of the bar 24 and the screwed spindles 25 and are held stably in this position. This means that when grooves do not have to be cut in the ground, for example when sowing in ploughed land, it is not necessary to remove the device according to the invention from between the tractor and the seed-drill, something which was actually necessary in the conventional device, since the cutters mounted on leaf springs could swing freely up and down in the case. In the case of the device according to the invention much less attachment and detachment work is therefore needed.

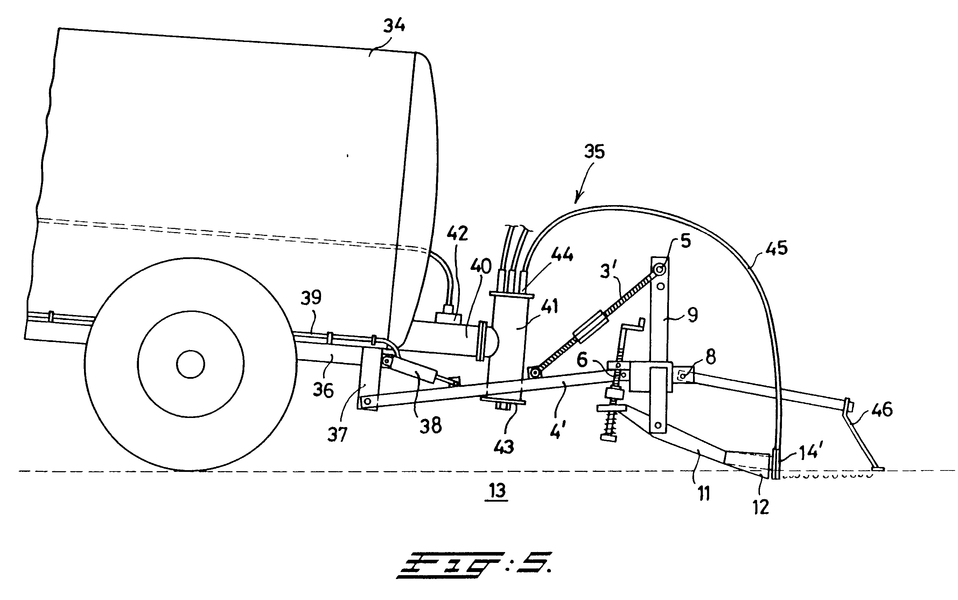

In Fig. 5 the device according to the invention for cutting grooves in the ground is fitted behind a slurry tanker 34 and combined with a device 35 for injecting slurry into the ground 13. The device is fastened by means of the fastening points 5 and 6 to a three-point suspension 3′, 4′ fastened to the rear of the slurry tanker 34. The three-point suspension 3′, 4′ is rotatably fixed on the slurry tanker 34 by means of a bracket 37 rigidly connected to the frame 36 of the tanker 34. In order to permit movement up and down of the three-point suspension 3′, 4′, provision is made between the three-point suspension 3′, 4′ and the bracket 37 for a hydraulic cylinder which is connected by means of a line 39 to the hydraulic system of the tractor (not shown) behind which the slurry tanker 34 is hitched.

A discharge tube 40 to which a stone collector 41 is connected is disposed at the rear side of the tank 34. The discharge tube can be shut off by means of a valve 42 which can be operated from the tractor. The stone collector 41 is provided at the bottom with a removable cover 43. Fitted on the top of the stone collector 41 is a connector 44 to which are attached a number of hoses 45 by means of which slurry from the tanker 34 can be placed in the ground 13. A slurry tanker 34 with hoses 45 connected thereto for injecting slurry into the ground is known per se.

At the end each hose 45 is connected to the groove widener 14′ which is provided at the end of a cutter arm 11 behind the cutter 12, and is in the form of a tube. In this way the slurry can be injected from the tanker 34 through the hoses 45 and the groove wideners 14 into grooves in the ground 13.

The cutters 12 are spaced, for example, 10 cm apart, so that for a working width of 3 metres the device is provided with about 30 cutter arms 11 with cutters 12 and groove wideners 14, while a hose 45 runs from the stone collector 41 to each groove widener 14. The hoses 45 are, for example, 3 cm thick.

In order to shut off the grooves in the ground 13 as much as possible after injection, it is possible to provide the device at the rear with a trailing device 46 which is fixed to the fastening point 8 of the frame 9.

Slurry can be injected into the ground in a very efficient manner using the described combination of a device for cutting grooves and a slurry injection device.

## Claims

1. Device for cutting grooves in the ground, designed to be fitted behind a traction vehicle in conjunction with a device for placing a product in the ground, and comprising a frame (9) and a number of cutter arms (11) which are at a right angle to the direction of travel disposed next to each other on the frame and movable essentially in the vertical direction, and each of which at the rear end viewed in the direction of travel, bears a cutter (12) with a cutter blade for cutting a groove in the ground, **characterized in that** the cutter arms (11) are in the form of single rigid plates extending in the vertical direction and near their front end, viewed in the direction of travel, are hingedly mounted next to each other in a vertical plane on a single common hinge pin (19) disposed at right angles to the direction of travel and carried by the frame, and in that a spring (30) which has the tendency to press the rear end of the cutter arm (11) with the cutter blade downwards acts upon each arm plate (11) individually.

2. Device according to Claim 1, characterized in that each cutter arm (11) is rigidly connected at its pivot point to a second arm (20) which is movable in the same vertical plane as the cutter arm (11) and which together with the cutter arm (11) forms a lever which pivots about the hinge pin, and in that the spring (30) for pressing the rear of the cutter arm downwards acts on the free end part (21) of the second arm (20), the spring (30) thereby pressing this end in the direction of a stop (24) which is adjustable relative to the frame (9).

3. Device according to Claim 2, characterized in that the free end part (21) of each second arm (20) is provided with at least one throughgoing hole (22) extending in the direction of movement thereof, and through which a pin (23) fixed in the stop (24) extends, while the pin (23) bears on its free end a spring stop (29), and a compression spring (30) is disposed round the pin between the spring stop (29) and the free end part (21) of the second arm (20).

4. Device according to Claim 2 or 3, characterized in that the adjustable stop (24) is a bar which runs in the transverse direction and is designed as a common stop for all second arms (20), and which is adjustable relative to the frame (9) by means of one or more screwed spindles (25).

5. Device according to one of Claims 1 - 4, characterized in that the distance between the individual cutter arms (11) is adjustable.

6. Device according to one or more of Claims 1 - 5, characterized in that the width of the cutter arms (11) is relatively small compared with the height thereof.

7. Combination of a device according to one or more of Claims 1 - 6 and a device for placing a product in the ground.

8. Combination according to Claim 7, characterized in that the device for placing a product in the ground is a seed-drill.

9. Combination according to Claim 7, characterized in that the device for placing a product in the ground is a device for injecting slurry in the ground.

## Patentansprüche

1. Vorrichtung zum Schneiden von Rillen in den Boden, die gestaltet ist, um hinter einem Zugfahrzeug in Verbindung mit einer Einrichtung zum Plazieren eines Produkts in dem Boden eingebaut zu werden, und einen Rahmen (9) und eine Anzahl von Messerarmen (11) umfaßt, die unter einem rechten Winkel zur Fahrtrichtung angeordnet und im wesentlichen in der vertikalen Richtung beweglich sind, und jeder derselben an dem hinteren Ende, in der Fahrtrichtung gesehen, ein Messer (12) mit einer Messerklinge zum Schneiden einer Rille in den Boden trägt, dadurch gekennzeichnet, daß die Messerarme (11) in der Form von einzelnen starren Platten, die sich in der vertikalen Richtung erstrecken, vorliegen und in der Nähe ihres vorderen Endes, in der Fahrtrichtung gesehen, schwenkbar nebeneinander in einer vertikalen Ebene an einem einzigen gemeinsamen Scharnierbolzen (19) montiert sind, der unter einem rechten Winkel zur Fahrtrichtung angeordnet ist und von dem Rahmen getragen wird, und eine Feder (30), die dazu neigt, das hintere Ende des Messerarms (11) mit der Messerklinge nach unten zu drücken, auf jede Armplatte (11) einzeln wirkt.

2. Vorrichtung nach Anspruch 1, dadurch gekennzeichnet, daß jeder Messerarm (11) an seinem Drehpunkt mit einem zweiten Arm (20) starr verbunden ist, der in derselben vertikalen Ebene wie der Messerarm (11) beweglich ist und zusammen mit dem Messerarm (11) einen Hebel bildet, der sich um den Scharnierbolzen dreht, und die Feder (30) zum Hinunterdrücken des hinteren Endes des Messerarms auf den freien Endabschnitt (21) des zweiten Arms (20) wirkt, wobei die Feder (30) dadurch dieses Ende in die Richtung eines Anschlags (24) drückt, der relativ zu dem Rahmen (9) einstellbar ist.

3. Vorrichtung nach Anspruch 2, dadurch gekennzeichnet, daß der freie Endabschnitt (21) jedes zweiten Arms (20) mit wenigstens einer Durchgangsbohrung (22) versehen ist, die sich in die Richtung der Bewegung desselben erstreckt, und durch die sich ein Stift (23), der in dem Anschlag (24) befestigt ist, erstreckt, während der Stift (23) an seinem freien Ende einen Federanschlag (29) trägt, und eine Druckfeder (30) um den Stift herum zwischen dem Federanschlag (29) und dem freien Endabschnitt (21) des zweiten Arms (20) angeordnet ist.

4. Vorrichtung nach Anspruch 2 oder 3, dadurch gekennzeichnet, daß der einstellbare Anschlag (24) ein Barren ist, der in die Querrichtung läuft und als ein gemeinsamer Anschlag für alle zweiten Arme (20) gestaltet ist, und der relativ zu dem Rahmen (9) mittels einer oder mehrerer Gewindespindeln (25) einstellbar ist.

5. Vorrichtung nach einem der Ansprüche 1 bis 4, dadurch gekennzeichnet, daß die Entfernung zwischen den einzelnen Messerarmen (11) einstellbar ist.

6. Vorrichtung nach einem oder mehreren der Ansprüche 1 bis 5, dadurch gekennzeichnet, daß die Breite der Messerarme (11) verglichen mit der Höhe derselben relativ gering ist.

7. Kombination einer Vorrichtung nach einem oder mehreren der Ansprüche 1 bis 6 und einer Einrichtung zum Plazieren eines Produkts in dem Boden.

8. Kombination nach Anspruch 7, dadurch gekennzeichnet, daß die Einrichtung zum Plazieren eines Produkts in dem Boden eine Breitsämaschine ist.

9. Kombination nach Anspruch 7, dadurch gekennzeichnet, daß die Einrichtung zum Plazieren eines Produkts in dem Boden eine Einrichtung zum Einführen von Schlamm in den Boden ist.

## Revendications

1. Appareil pour ouvrir des sillons dans le sol, prévu pour être installé à l'arrière d'un véhicule tracteur en combinaison avec un dispositif pour placer un produit dans le sol, cet appareil comprenant un cadre (9) et une pluralité de bras de couteau (11) disposés sur le cadre côte à côte et à angle droit par rapport à la direction de déplacement, ces bras étant essentiellement mobiles dans un plan vertical et supportant chacun en leur extrémité arrière, telle que vue par rapport à la direction de déplacement, un couteau (12) avec une lame de couteau pour ouvrir un sillon dans le sol, caractérisé en ce que les bras de couteau (11) sont sous la forme de plaques rigides individuelles orientées dans un plan vertical, et sont montés proches de leur extrémité avant, telle que vue par rapport à la direction de déplacement, l'un à côté de l'autre en rotation dans un plan vertical sur un axe unique commun de rotation (19) disposé à angle droit par rapport à la direction de déplacement et porté par le cadre ; et en ce qu'un ressort (30) ayant tendance à presser l'extrémité arrière du bras de couteau (11) avec sa lame de couteau vers le bas, agit individuellement sur chaque bras (11) en forme de plaque.

2. Appareil selon la revendication 1, caractérisé en ce que chaque bras de couteau (11) est relié rigidement en son point de rotation à un second bras (20) mobile dans le même plan vertical que celui du bras de couteau (11), ce second bras formant avec le bras de couteau (11) un levier mobile en rotation autour de l'axe de charnière ; et en ce que le ressort (30) prévu pour presser l'extrémité arrière du bras de couteau vers le bas agit en l'extrémité libre (21) du second bras (20), ce ressort (30) pressant donc cette extrémité (21) en direction d'une butée (24) dont la position est ajustable par rapport au cadre (9).

3. Appareil selon la revendication 2, caractérisé en ce que l'extrémité libre (21) de chaque second bras (20) comprend au moins un orifice traversant (22) orienté dans la direction du mouvement et, au travers duquel passe une tige (23) fixée à la butée (24), cette tige (23) portant en son extrémité libre une butée de ressort (29) ; et en ce qu'un ressort de compression (30) est enfilé autour de cette tige entre la butée de ressort (29) et l'extrémité libre (21) du second bras (20).

4. Appareil selon la revendication 2 ou 3, caractérisé en ce que la butée ajustable (24) est une barre transversale agissant comme butée commune pour tous les seconds bras (20), la position de cette barre étant ajustable par rapport au cadre (9) au moyen d'un ou plusieurs axes filetés (25).

5. Appareil selon l'une des revendications 1 à 4, caractérisé en ce que la distance entre les bras de couteau individuels (11) est ajustable.

6. Appareil selon l'une des revendications 1 à 5, caractérisé en ce que la largeur des bras de couteau (11) est relativement petite en comparaison avec leur hauteur.

7. Combinaison d'un appareil selon l'une des revendications 1 à 6 et d'un dispositif pour placer un produit dans le sol.

8. Combinaison selon la revendication 7, caractérisée en ce que le dispositif pour placer un produit dans le sol est un injecteur de graines.

9. Combinaison selon la revendication 7, caractérisée en ce que le dispositif pour placer un produit dans le sol est un appareil pour injecter un mélange liquide.
